# EUROPÄISCHE PATENTSCHRIFT

(11) **EP 1 731 826 B1**
(45) Veröffentlichungstag und Bekanntmachung des Hinweises auf die Patenterteilung: **30.12.2009**
(21) Anmeldenummer: 06010896.6
(22) Anmeldetag: 27.05.2006
(51) Int. Cl.: F17C 7/00, F17C 13/00, F16K 17/38, A62C 2/04

(54) **Auslöser eines Druckmittelspeichers**
Trigger for a pressured container
Déclencheur pour un réservoir sous pression

(30) Priorität: 06.06.2005 DE 102005026177
(43) Veröffentlichungstag der Anmeldung: 13.12.2006
(73) Patentinhaber: Grasl, Andreas, 3452 Heiligeneich (AT)
(72) Erfinder: Grasl, Andreas, 3452 Heiligeneich (AT)
(74) Vertreter: Schubert, Siegmar

(56) Entgegenhaltungen:
- EP-A- 0 234 926
- CH-A5- 643 462
- DE-A1- 2 434 049
- DE-A1- 3 032 791
- DE-A1- 3 429 178
- DE-A1- 3 700 616
- DE-C1- 3 627 727
- DE-U1- 8 102 639
- DE-U1- 8 326 617
- GB-A- 1 319 549

## Beschreibung

Die Erfindung betrifft einen Auslöser zur Auslösung eines Druckmittelspeichers, insbesondere einer CO₂-Einwegflasche nach dem Oberbegriff des Anspruchs 1.

An derartige Auslöser kann eine CO₂-Einwegflasche bzw. CO₂-Patrone angebracht werden, dessen Verschlußabschnitt mit dem Auslöser geöffnet werden kann, um eine Druckmittelverbindung beispielsweise zu einem Zylinderraum eines Pneumatikzylinders zu schaffen, wodurch der Pneumatikzylinder aktiviert wird, der ein einstellbares Element, insbesondere eine Rauchabzugsklappe in einer Rauch- und Wärmeabzugsanlage, betätigt.

Ein aus der DE-U-8 326 617 bekannter Auslöser eines Druckmittelspeichers der eingangs genannten Gattung weist einen mit einer Spannfeder spannbaren Anstechbolzen, der an einem Ende gegenüber einem Verschlussabschnitt des Druckmittelspeichers eine Anstechspitze trägt, sowie eine lösbare Arretierung des Anstechbolzens auf. Die Arretierung umfasst eine Aufnahmebohrung, in der eine Reihe aneinanderstoßender Arretierungselemente einschließlich Kugeln aufgenommen sind. Die Aufnahmebohrung ist quer zu dem Anstechbolzen angeordnet, und zwar quer zu einer Ausformung in dem Anstechbolzen in Form konischer Ansätze in betriebsbereiter Position, in der eine der Kugeln in die Ausformung eingreift. In die Aufnahmebohrung mündet eine Querbohrung, in der ein Auslösebolzen verschiebbar ist. Die Aufnahmebohrung ist an einer der Querbohrung gegenüberliegenden Stelle durchbrochen und durch ein federnd nachgiebiges Wandelement begrenzt. Wenigstens eine der Kugeln liegt zwischen dem Auslösebolzen und dem federnd nachgiebigen Wandelement und kann somit durch den Auslösebolzen aus einer in der Aufnahmebohrung zentrierten Lage federnd herausgedrückt werden.

Der gattungsgemäße Auslöser ist also ein federvorgespannter Auslöser mit einem mit einer Spannfeder spannbaren Anstechbolzen, der an einem dem Verschlußabschnitt des Druckmittelspeichers zugewandten Ende eine Anstechspitze trägt. Der gespannte Anstechbolzen ist in betriebsbereiter Position arretiert und die Arretierung kann beispielsweise in einem Alarmfall wie Feueralarm gelöst werden, wodurch der Anstechbolzen unter der Kraft der Spannfeder die Anstechspitze in den Verschlußabschnitt des Druckmittelspeichers stößt, der somit geöffnet wird. Das Lösen der Arretierung kann willkürlich manuell oder elektromagnetisch erfolgen.

Zu dem aus der Praxis bekannten Stand der Technik der CO₂-Auslöser gehören solche mit Federauslöser in Verbindung mit Rastauslösungen wie Kniehebelauslösungen. Die federvorgespannten Auslöser werden insbesondere bei Magnetauslösungen eingesetzt, um Auslösekräfte zu minimieren. Die Auslöser werden auch als Auslöseventile bezeichnet und können mit zusätzlichen Ventilen kombiniert sein.

Die bekannten Auslöser erfordern eine Fertigung und Montage mit sehr hoher Präzision, die kostenintensiv sind.

Der vorliegenden Erfindung liegt daher die Aufgabe zugrunde, die Fertigung der Auslöser zu vereinfachen, wodurch Fertigungskosten eingespart werden können, und gleichwohl eine hohe Zuverlässigkeit der Auslöser zu erreichen.

Diese Aufgabe wird durch einen Auslöser mit den in Anspruch 1 angegebenen Merkmalen gelöst.

Die Erfindung geht davon aus, daß die Arretierung des in der Position betriebsbereit gespannten Anstechbolzens durch eine Reihe von zentriert in einer Aufnahmebohrung aneinanderliegenden Arretierungselementen einschließlich Kugeln erfolgt, von denen eine äußere Kugel in eine Nut als Ausformung in dem Anstechbolzen stößt, zu dem die Aufnahmebohrung quer angeordnet ist.

Zum Lösen der Arretierung werden erfindungsgemäß zwei Kugeln der Reihe aus der zentrierten Lage durch den Auslösebolzen quer herausgedrückt, wodurch Raum in der Aufnahmebohrung frei wird, in den sich die äußere Kugel aus der Nut des vorgespannten Anstechbolzens bewegt, wobei sie andere Arretierungselemente bzw. Kugeln verschieben kann. Der Anstechbolzen, dessen Nut somit von der äußeren Kugel befreit ist, kann durch die Wirkung der Spannfeder mit seiner Anstechspitze den Verschlußabschnitt des Druckmittelspeichers, insbesondere die CO₂-Einwegflasche oder Patrone, anstechen. Um zu gestatten, daß die beiden Kugeln quer aus ihrer in der Reihe in der Aufnahmebohrung zentrierten Lage gedrückt werden können, ist die Aufnahmebohrung gegenüber dem Auslösebolzen durchbrochen und durch ein federnd nachgiebiges Wandelement begrenzt. -

Um die Position "betriebbereit" wieder zu erreichen, wird der Auslösebolzen aus der Aufnahmebohrung zurückgezogen. Wenn dann die Nut des Anstechbolzens wieder mit der Aufnahmebohrung der Arretierungselemente fluchtet, dringt die äußere Kugel der Reihe Arretierungselemente bzw. Kugeln wieder in die Nut ein, weil die zuvor aus der Reihe herausgedrückten Kugeln durch das federnd nachgiebige Wandelement der Aufnahmebohrung wieder in die zentrierte Lage in der Kugelreihe zurückgedrückt werden. Denn diese vormals aus der zentrierten Reihe herausgedrückten Kugeln und das federnd nachgiebige Wandelement stehen nicht mehr unter dem Auslösedruck des Auslösebolzens. Die Arretierungselemente bzw. Kugeln in der Aufnahmebohrung werden durch das federnd nachgiebige Wandelement in ihrer Position gehalten, auch wenn nunmehr die Vorspannkraft der Spannfeder an dem Anstechbolzen erhöht wird, wodurch der Auslöser wieder betriebsbereit arretiert ist.

Die aneinandergereihten Kugeln bewirken eine sehr zuverlässige Arretierung, die das Prinzip eines Kniehebels ersetzt und verbessert. Die Kugeln und sonstige Elemente können Standard-Normteile sein, die aus Massenproduktion in hoher Genauigkeit und zu geringen Kosten erhältlich sind.

Nach Anspruch 2 weist die Nut als Ausformung des Anstechbolzens abgeschrägte bzw. konische Seitenwände auf, an denen eine äußere der Kugeln in der Position "betriebsbereit" anlegt. Mit den abgeschrägten Seitenwänden wird das Herausdrücken der äußeren Kugel aus der Nut des Anstechbolzens unter der Kraft der Spannfeder zuverlässig bewirkt, wenn in der Aufnahmebohrung Raum infolge der teilweise herausgedrückten Kugeln frei wird.

Gemäß Anspruch 3 kann in der Aufnahmebohrung zwischen der Kugel an der Nut des Anstechbolzens und einer der Kugeln bis zu dem federnd nachgiebigen Wandelement wenigstens ein Zylinderstift angeordnet sein. Mit dem Zylinderstift wird gewährleistet, daß sich keine negativen Einflüsse des sich eventuell drehenden Anstechbolzens auf die Kugeln im Bereich des federnd nachgiebigen Wandelements auswirken können.

Das federnde Wandelement kann einfach durch eine insbesondere plane Scheibe realisiert sein, die sich an eine seitliche Öffnung der Aufnahmebohrung anschließt. Die Scheibe ist durch eine Feder belastet, insbesondere eine Druckfeder, welche die Scheibe gegen die Kugeln in der Aufnahmebohrung drückt.

Der Auslösebolzen auf der gegenüberliegenden Seite der Scheibe bzw. des nachgiebigen Wandelements kann manuell betätigt werden, aber auch gemäß Anspruch 5 zweckmäßig mit einem elektromagnetischen Betätigungselement bzw. Magnetauslöser in Verbindung stehen, für den sich der Auslöser gut eignet, weil die Auslösekraft gering ist.

Der Auslöser kann gemäß Anspruch 7 kompakt mit wenigstens einem Montageblock ausgebildet sein, in dem die Aufnahmebohrung mit der Querbohrung für den Auslösebolzen sowie mit einer Scheiben- und Federaufnahme, eine den Anstechbolzen aufnehmende Bohrung mit einer Anschlußöffnung für den Druckmittelspeicher, eine Gewindebohrung für den Spannmechanismus sowie ein Druckmittelkanal ausgeformt sind. Ein Magnetauslöser kann dabei außen an dem Montageblock angebracht sein.

Montagegünstig können nach Anspruch 9 die Aufnahmebohrung sowie die Scheiben- und Federaufnahme in dem Metallgehäuse nach außen durch che Abdeckung abgedeckt sein. Die Abdeckungen können für Wartungs- bzw. Reparaturzwecke lösbar sein.

Eine Abdichtung des Bereichs, in den das Druckmittel einströmt, von der Umgebung erfolgt gemäß Anspruch 10 zweckmäßig durch einen abdichtenden O-Ring zwischen zwei Arretierungselementen, insbesondere zwischen der äußeren Kugel an dem Anstechbolzen und einem benachbarten Zylinderstift.

Da insbesondere Auslöser für CO₂-Einwegflaschen bzw. -Patronen vorwiegend in der Industrie und dort teilweise in aggressiver Atmosphäre eingesetzt werden, ist es wichtig, für ausreichenden Korrosionsschutz zu sorgen, was gemäß Anspruch 11 durch eine Abdichtung der darin angegebenen Bohrungen sowie Scheiben- und Federaufnahme, welche die Auslösemechanik beinhalten, erzielt wird. Dadurch gelingt es insbesondere, mit geringem Aufwand eine hohe Schutzklasse für Magnetauslösungen zu erzielen.

Ausführungsbeispiele der Erfindung werden im folgenden anhand einer Zeichnung mit neun Figuren erläutert, woraus sich weitere vorteilhafte Einzelheiten ergeben können. Es zeigt:
- Figur 1: eine erste Ausführungsform des Auslösers mit angebrachter CO₂-Patrone bzw. CO₂-Einwegflasche in der Position "betriebsbereit",
- Figur 2: den Auslöser gemäß Figur 1 in der in Figur 1 mit A-A bezeichneten Schnittebene,
- Figur 3: den Auslöser gemäß Figur 1 in einem Längsschnitt in Position "ausgelöst",
- Figur 4: den Auslöser gemäß Figur 3 in einem Querschnitt in der Schnittebene A-A,
- Figur 5: eine zweite Ausführungsform des Auslösers, und zwar mit zusätzlicher Magnetauslösung in der Position "Bereitschaft",
- Figur 6: den Auslöser gemäß Figur 5 in einem Querschnitt,
- Figur 7: den Auslöser gemäß Figur 5, jedoch in der Position "ausgelöst" in einem Längsschnitt,
- Figur 8: einen Querschnitt durch den Auslöser gemäß Figur 7 in der Schnittebene A-A und
- Figur 9: eine Einzelheit des Auslösers, ähnlich der ersten Ausführungsform in der Position und Darstellung gemäß Figur 4, nämlich die Arretierungselemente in der Aufnahmebohrung.

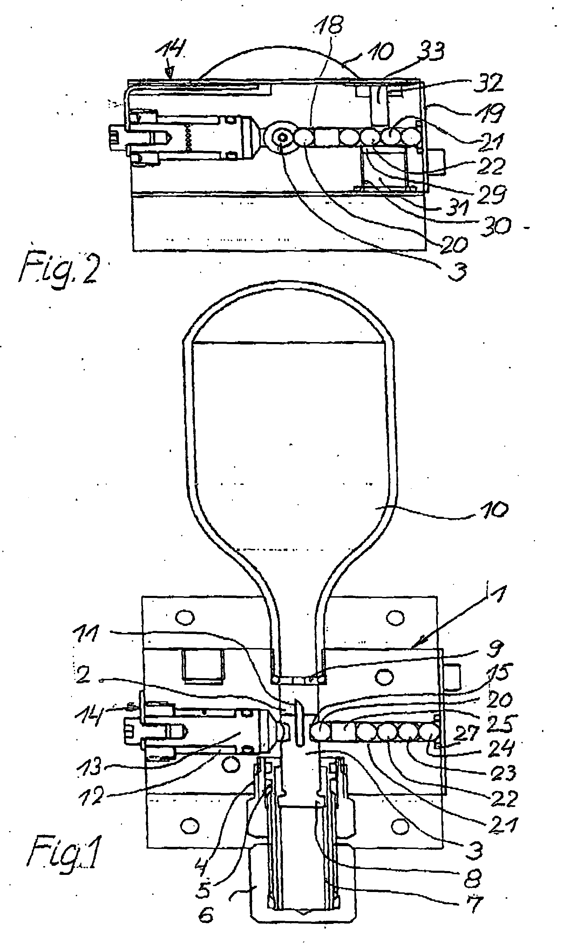

In den Figuren 1 bis 4 ist mit 1 ein Montageblock bezeichnet, aus dem eine Bohrung 2 für einen Anstechbolzen 3, eine Gewindebohrung 4 für einen Spannmechanismus 5 konzentrisch zu der Bohrung 2 bzw. dem Anstechbolzen 3 ausgeformt sind. An einem in Figur 1 unteren Ende des Spannmechanismus befindet sich eine Stellschraube 6, mit der eine Spannfeder 7 gespannt werden kann, die sich an einem Flansch 8 des Anstechbolzens 3 abstützt, um diesen in Richtung auf eine Anschlußöffnung 9 in dem Montageblock zu drücken, die eine CO₂-Patrone aufnimmt. Zum Anstechen eines nicht bezeichneten Verschlußabschnitts der CO₂-Patrone ist der Anstechbolzen 3 mit einer Anstechnadel 11 versehen.

Die Bohrung 2 für den Anstechbolzen bildet einen Druckraum, der mit einer Querbohrung 12 in Verbindung steht, in der ein Kolben 13 einer Anzeigeeinrichtung 14 verschiebbar gelagert ist, sowie mit einem nicht bezeichneten Druckmittelkanal.

Der Anstechbolzen 3 mit der Anstechnadel 11, der Spannmechanismus 5 des Anstechbolzens, die Anschlußöffnung für die CO₂-Patrone und die Anzeigeeinrichtung 14 gehören zum Stand der Technik und brauchen daher nicht detailliert beschrieben zu werden.

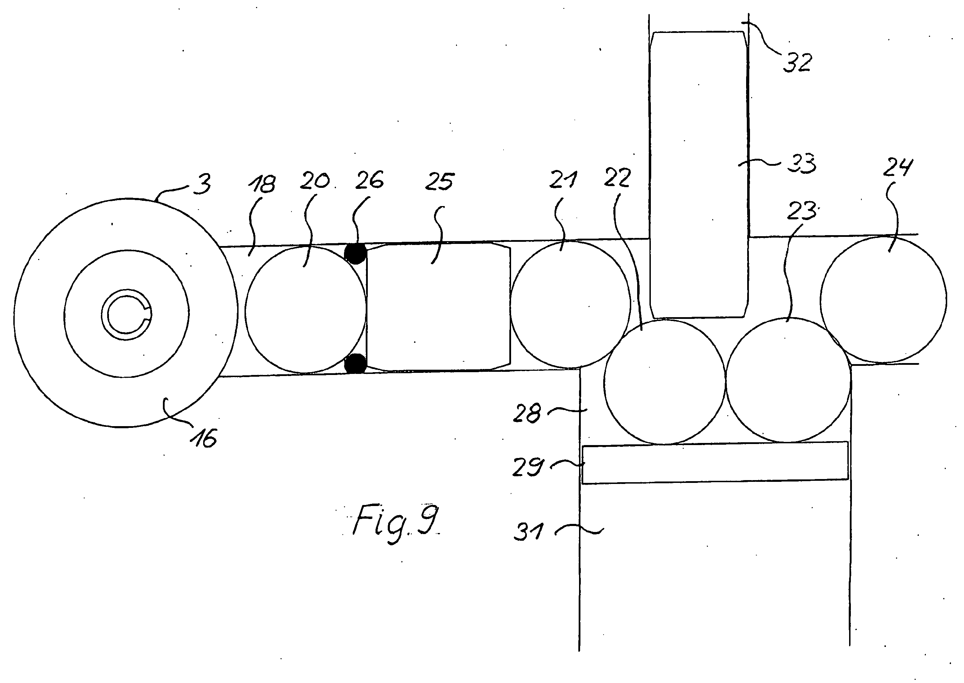

In den Figuren 1 und 2 ist der Auslöser in seiner Position "betriebsbereit" dargestellt. Zur Verriegelung weist der Anstechbolzen 3 eine umlaufende Nut 15 mit schrägen bzw. konischen Seitenwänden 16, 17 auf, in welche ein Arretierungselement in Form einer Kugel 20 eingreifen kann. Zur Aufnahme einer Reihe von aneinanderstoßenden Arretierungselementen ist aus dem Montageblock quer zu dem Anstechbolzen 3, und zwar zu dessen Nut in der Position "betriebsbereit" eine Aufnahmebohrung 18 ausgeformt, die zumindest an ihrem der Nut 1 5 zugewandten Ende offen ist und in der vorliegenden Ausführungsform auch an ihrem entgegengesetzten Ende an dem Montageblock offen sein kann, beispielsweise um die Arretierungselemente in die Aufnahmebohrung einzuführen, wonach das Ende durch eine flache Abdeckung 19 verschlossen werden kann. Die Arretierungselemente bestehen im einzelnen in der in den Figuren 1 bis 4 gezeigten Ausführungsform aus fünf Kugeln 20 - 24 und einem Zylinderstift 25, dessen nicht bezeichnete Längsachse in der ebenfalls nicht bezeichneten Längsachse der Aufnahmebohrung 18 liegt. Speziell befindet sich der Zylinderstift 25 zwischen der Kugel 20, die als äußere Kugel der Reihe in die Nut 15 des Anstechbolzens 3 eingreifen kann, und der Kugel 21 der in Reihe angeordneten Kugeln. - Wie in Figur 9 gezeigt, in der eine im Prinzip gleiche Anordnung der Arretierungselemente jedoch in einer Position "ausgelöst" dargestellt sind, kann zwischen der äußeren Kugel 20 und dem Zylinderstift 25 ein O-Ring 26 in der Aufnahmebohrung 18 angeordnet sein, um die Bohrung 2 für den Anstechbolzen gegenüber der Umgebung der Aufnahmebohrung 18 abzuschließen.

In der Position "betriebsbereit" stoßen die Arretierungselemente, nämlich die Kugeln 20 - 24 und der Zylinderstift 25 zentriert in der Längsachse der Aufnahmebohrung 18 aneinander an, wobei die äußere Kugel 20 in der Nut 15 liegt und die entgegengesetzte äußere Kugel 24 über einen O-Ring 27 an die Abdeckung 19 drückt. Die zentrierte Reihe Arretierungselemente hat eine größere Längsausdehnung als die Anordnung der Arretierungselemente in der Position "ausgelöst".

Damit die Nut 1 5 zum Auslösen des Auslösers von der äußeren Kugel 20 freigegeben werden kann, weist die Aufnahmebohrung 18 eine seitliche Ausnehmung 28 auf, siehe Figur 9, die durch ein federnd nachgiebiges Wandelement in Form einer Scheibe 29, die unter dem Druck einer z.B. in Figur 2 angedeuteten Feder 30 steht, so daß die Scheibe 29 in Richtung auf die Achse der Aufnahmebohrung 18 gedrückt wird. Die Scheibe 29 und die Feder 30 sind in einer hohlen Scheiben- und Federaufnahme 31 in dem Montageblock 1 angeordnet, siehe Figur 9. Auf der zu der Scheiben- und Federaufnahme 31 gegenüberliegenden Seite der Aufnahmebohrung 18 weist der Montageblock eine Querbohrung 32 auf, die sich von außen quer zu der Aufnahmebohrung 18 erstreckt und in der ein Auslösebolzen 33 verschiebbar gelagert ist. Der Auslösebolzen kann außen mit einem manuellen Betätigungselement in Verbindung stehen, welches in der Zeichnung nicht dargestellt ist.

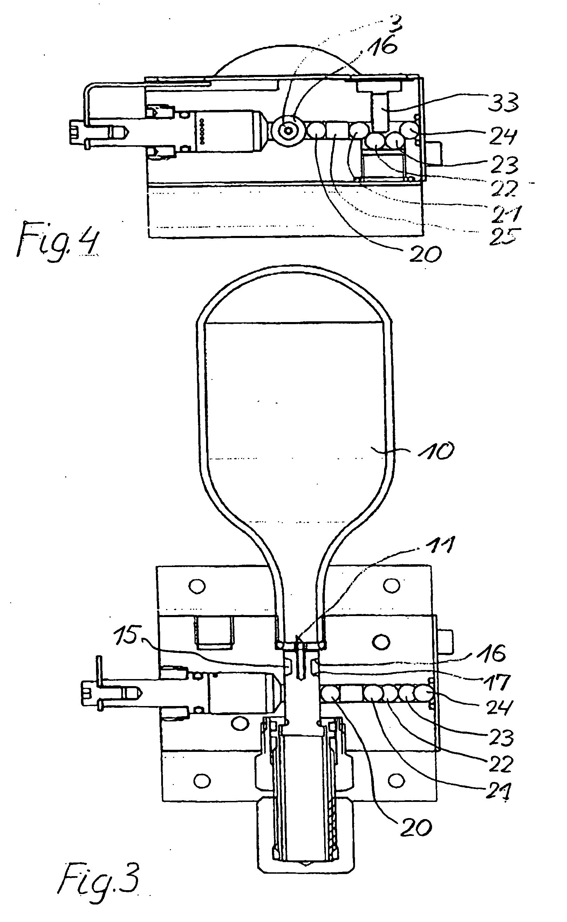

Zum Auslösen des Auslösers, bei dem die Anstechnadeln 11 unter dem Druck der Spannfeder 7 in die CO₂-Patrone 10 stechen soll, wird der Auslösebolzen 33 in die in den Figuren 4 und 9 gezeigte Stellung eingedrückt, in welcher der Auslösebolzen 33 die Kugeln 22 und 23 der Arretierungselemente 20 - 25 in die seitliche Ausnehmung 28 bis in die in Figur 9 gezeigte Lage unter die beidseitig angrenzenden Kugeln 21, 22 drückt, wodurch sich die Erstreckung der Anordnung der Arretierungselemente in der Aufnahmebohrung 18 in Richtung deren nicht bezeichneter Längsachse verkürzt, wodurch in der Aufnahmebohrung Raum freigegeben wird. In diesen Raum kann die äußere Kugel 20 unter der Wirkung der Spannfeder 7 aus der Nut 15 gleiten bzw. rollen, wie in Figuren 3, 4, 9 dargestellt. In Figur 3 ist in der Position "ausgelöst" die Anstechnadel 11 in die CO₂-Patrone 10 gestoßen, so daß aus der CO₂-Patrone CO₂ in die Bohrung 2 strömen kann.

Das ausströmende CO₂ kann ein nicht dargestelltes integriertes Ventil, z.B. ein Vorrangventil oder ein Alarm- oder Lüftungsventil einer Rauch- und Wärmeabzugsanlage betätigen.

Die Position "ausgelöst" wird mit der Anzeigeeinrichtung 14 infolge Verschiebung deren Kolbens 13 in der Querbohrung 12 angezeigt.

Wenn der Anstechbolzen 3 in seiner Bohrung mit der Stellschraube 6 zurückgezogen wird, so daß die Anstechnadel 11 aus der CO₂ -Patrone 10 gelangt, kann die Nut 1 5 mit der nicht bezeichneten Längsachse der Aufnahmebohrung 18 wieder fluchten, und die äußere Kugel 20 in die Nut 15 gelangen. Sie wird dadurch selbsttätig in die Nut gestoßen, daß die aus der Aufnahmebohrung 18 teilweise herausgedrückten Kugeln 22, 23 durch die Scheibe 29 infolge der Kraft der Feder 30 vollständig in die Aufnahmebohrung 18 zurückgedrückt werden, so daß alle Arretierungselemente 20 - 25 zentriert in einer Reihe liegen, die sich von der Abdeckung 1 9 bis in die Nut 15 erstreckt. Auch wenn die Vorspannkraft der Spannfeder 7 wieder erhöht wird, bleibt der Anstechbolzen 3 in seiner in Figur 1 dargestellten Lage, da die äußere Kugel 20 an der Seitenwand 17 bzw. Fläche der Nut 15 anliegt und die Kugeln 22, 23 durch die an der Scheibe 29 angreifende Feder 30 in ihrer Stellung gehalten werden. Der Auslöser ist damit wieder betriebsbereit.

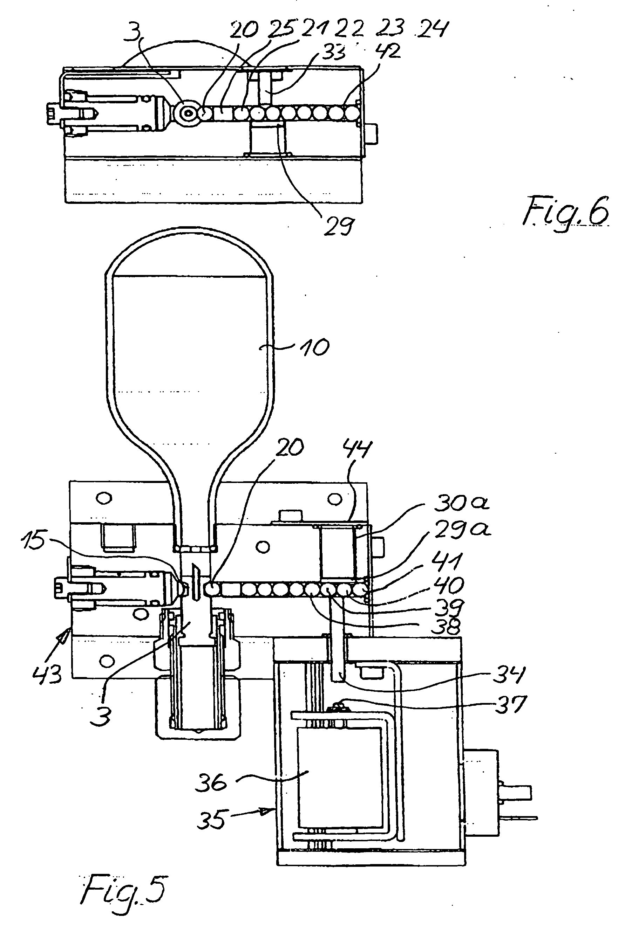

Die in den Figuren 5 bis 8 dargestellte zweite Ausführungsform mit einem zusätzlichen elektromagnetischen Betätigungselement ist grundsätzlich wie die oben beschriebene Ausführungsform aufgebaut, bei der der Auslösebolzen mit einem manuellen Betätigungselement in Verbindung steht. Gleiche Teile sind daher mit gleichen Bezugszeichen versehen. Auch die Wirkung der zweiten Ausführungsform des Auslösers ist die gleiche wie die der ersten Ausführungsform, abgesehen von der zusätzlichen elektromagnetischen Betätigungsart.

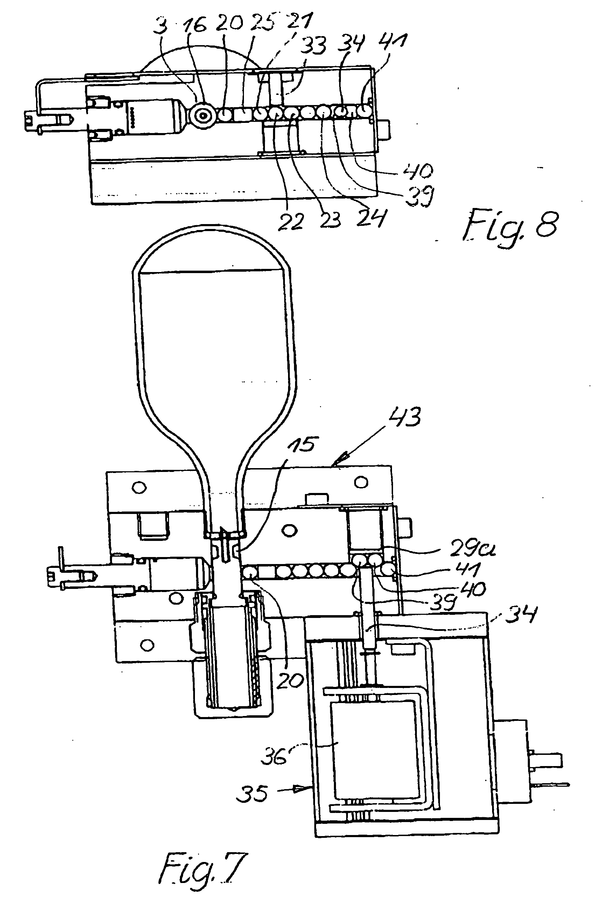

In den Figuren 5 und 7, in denen die zweite Ausführungsform in der Position "betriebsbereit" bzw. in der Position "ausgelöst" dargestellt ist, ist zur Betätigung des Auslösebolzens 34, das allgemein mit 35 bezeichnete elektromagnetische Betätigungselement vorgesehen, welches im wesentlichen einen Elektromagneten 36, welcher einen Magnetstößel 37 zwischen einer zurückgezogenen Stellung, siehe Figur 5, und einer vorgeschobenen Stellung, siehe Figur 7, einstellen kann.

In der zweiten Ausführungsform des Auslösers mit dieser Magnetauslösung gehören zu der Reihe Arretierungselemente weitere Kugeln, die mit 38 - 41 bezeichnet sind, entsprechend der größeren Länge der Aufnahmebohrung 42 in dem verlängerten Montageblock, an dem das elektromagnetische Betätigungselement 35 neben einem nicht dargestellten manuellen Betätigungselement angebracht ist. Der mit dem elektromagnetischen Betätigungselement 35 betätigbare Auslösebolzen 34 und der mit dem manuellen Betätigungselement betätigbare Auslösebolzen 33 sind um 90° gegeneinander verdreht in dem Montageblock 43 angeordnet.

In der Position "Betriebsbereitschaft", die in den Figuren 5 und 6 dargestellt ist, ist keine der Kugeln 22, 23, 39, 40 aus der Reihe Arretierungselemente gedrückt, weil der Auslösebolzen 34 von dem Magnetstößel 37 unbeeinflußt in seiner Ausgangsstellung ist und auch der Auslösebolzen 33 nicht betätigt ist. Somit liegt die äußere Kugel 20 wiederum in der Nut 15 des Anstechbolzens 3.

Hingegen werden gemäß den Figuren 7 und 8, wenn der Magnetstößel 37 den Auslösebolzen 34 hochdrückt, die Kugeln 39, 40 aus der Aufnahmebohrung 42 entgegen der mit der Feder 30a belasteten Scheibe 29a teilweise herausgedrückt und die äußere Kugel 20 kann aus der Nut 15 heraus den Abstechbolzen freigeben.

Zur weiteren Funktion der in den Figuren 5 bis 8 gezeigten Ausführungsform, insbesondere bei manueller Betätigung, kann auf die erste Ausführungsform gemäß den Figuren 1 bis 4 und 9 verwiesen werden.

### Bezugszahlenliste

- 1: Montageblock
- 2: Bohrung für Anstechbolzen
- 3: Anstechbolzen
- 4: Gewindebohrung für Spannmechanismus
- 5: Spannmechanismus
- 6: Stellschraube
- 7: Spannfeder
- 8: Flansch
- 9: Anschlußöffnung
- 10: CO₂-Patrone
- 11: Anstechnadel (Anstechspitze)
- 12: Querbohrung
- 13: Kolben
- 14: Anzeigeeinrichtung
- 15: Nut
- 16: Seitenwand
- 17: Seitenwand
- 18: Aufnahmebohrung
- 19: flache Abdeckung
- 20: Kugel (äußere)
- 21: Kugel Arretierungselemente
- 22: Kugel
- 23: Kugel
- 24: Kugel (entgegengesetzt äußere)
- 25: Zylinderstift
- 26: O-Ring
- 27: O-Ring
- 28: seitliche Ausnehmung
- 29: Scheibe
- 29a: Scheibe
- 30: Feder
- 30a: Feder
- 31: Scheiben- und Federaufnahme
- 32: Querbohrung
- 33: Auslösebolzen
- 34: Auslösebolzen
- 35: elektromagnetisches Betätigungselement
- 36: Elektromagnet
- 37: Magnetstößel
- 38: Kugel
- 39: Kugel Arretierungselemente
- 40: Kugel
- 41: Kugel
- 42: Aufnahmebohrung
- 43: Montageblock
- 44: flache Abdeckung

## Patentansprüche

1. Auslöser eines Druckmittelspeichers, insbesondere einer CO₂-Einwegflasche (10), mit einem mit einer Spannfeder (7) spannbaren Anstechbolzen (3), der an einem Ende gegenüber einem Verschlussabschnitt des Druckmittelspeichers eine Anstechspitze (11) trägt, sowie mit einer lösbaren Arretierung des Anstechbolzens (3),
wobei die Arretierung eine Aufnahmebohrung (18, 42) aufweist, in der eine Reihe aneinander stoßender Arretierungselemente (20 - 25, 38 - 41) einschließlich Kugeln (20 - 24, 38 - 41) aufgenommen sind, wobei die Aufnahmebohrung (18, 42) quer zu dem Anstechbolzen (3) angeordnet ist , und zwar quer zu einer Ausformung (15) in dem Anstechbolzen (3) in betriebsbereiter Position, in der eine Kugel (20) in die Ausformung (15) eingreift, wobei in die Aufnahmebohrung (18, 42) eine Querbohrung (32) mündet, in der ein Auslösebolzen (33, 34) verschiebbar ist, wobei die Aufnahmebohrung (18, 42) an einer der Querbohrung (32) gegenüberliegenden Stelle durchbrochen ist und durch ein federnd nachgiebiges Wandelement (29, 29a) begrenzt ist und wobei wenigstens eine der Kugeln (22, 23, 39, 40) zwischen dem Auslösebolzen (33, 34) und dem federnd nachgiebigen Wandelement (29, 30; 29a, 30a) liegt und somit durch den Auslösebolzen (33, 34) aus einer in der Aufnahmebohrung (18, 42) zentrierten Lage federnd herausdrückbar ist,
**dadurch gekennzeichnet,**
**dass** wenigstens zwei Kugeln (22, 23; 39, 40) durch den Auslösebolzen (33, 34) aus ihrer in der Aufnahmebohrung (18, 42) zentrierten Lage federnd herausdrückbar sind.

2. Auslöser nach Anspruch 1,
**dadurch gekennzeichnet,**
**dass** eine Nut (15) als Ausformung des Anstechbolzens (3) abgeschrägte bzw. konische Seitenwände (16, 17) aufweist, an die die eine der Kugeln (20) in betriebsbereiter Position des Anstechbolzens (3) anstößt.

3. Auslöser nach Anspruch 2,
**dadurch gekennzeichnet,**
**dass** in der Aufnahmebohrung (18) ein Zylinderstift (25) als eines der Arretierungselemente zwischen der Kugel (20) an der Nut (15) des Anstechbolzens (3) und einer der bis zu dem federnd nachgiebigen Wandelement (29, 29a) angeordneten Kugeln (21 - 24, 38, 39) vorgesehen ist.

4. Auslöser nach einem der Ansprüche 1 bis 3,
**dadurch gekennzeichnet,**
**dass** das federnd nachgiebige Wandelement (29, 29a) eine Scheibe ist, die durch eine Feder (30, 30a) gegen die Kugeln (22, 23; 39, 40) gedrückt ist.

5. Auslöser nach einem der vorangehenden Ansprüche,
**dadurch gekennzeichnet,**
**dass** der Auslösebolzen (34) mit einem elektromagnetischen Betätigungselement (35) in Verbindung steht.

6. Auslöser nach einem der Ansprüche 1 bis 6,
**gekennzeichnet durch**
ein manuelles Betätigungselement, welches mit dem Auslösebolzen (33) verbunden ist.

7. Auslöser nach einem der Ansprüche 1 bis 6,
**dadurch gekennzeichnet,**
**dass** er wenigstens einen Montageblock (1, 43) umfasst, in dem die Aufnahmebohrung (18, 42) mit der Querbohrung (32) für den Auslösebolzen (33, 34) sowie mit einer Scheiben- und Federaufnahme (31), eine den Anstechbolzen (3) aufnehmende Bohrung (2) mit einer Anschlussöffnung (9) für den Druckmittelspeicher, eine Gewindebohrung (4) für einen Spannmechanismus (5) sowie ein Druckmittelkanal ausgeformt sind.

8. Auslöser nach einem der Ansprüche 5 bis 7,
**dadurch gekennzeichnet,**
**dass** das elektromagnetische Betätigungselement (35) außen an einem Montageblock (1, 43) angebracht ist.

9. Auslöser nach einem der vorangehenden Ansprüche,
**dadurch gekennzeichnet,**
**dass** die Aufnahmebohrung (18, 42) und eine Scheiben- und Federaufnahme (31) nach außen durch eine flache Abdeckung (19) abgedeckt sind.

10. Auslöser nach einem der vorangehenden Ansprüche,
**dadurch gekennzeichnet,**
**dass** zwischen zwei Arretierungselementen (20, 25) in der Aufnahmebohrung (18, 42) ein abdichtender O-Ring (26) angeordnet ist.

11. Auslöser nach einem der Ansprüche 7 bis 11,
**dadurch gekennzeichnet,**
**dass** die Aufnahmebohrung (18, 42), die Scheiben- und Federaufnahme (31) sowie die Querbohrung (32) für den Auslösebolzen (33, 34) nach außen abgedichtet sind.

## Claims

1. Trigger for a pressurized container, particularly a CO₂-containing non-returnable bottle, comprising a priming pin (3) tensile by a cocking spring (7) said pin (3) carrying at one end facing a closure section of said pressurized container a piercing tip (11), and a releasable catch of said priming pin (3), wherein said catch includes a receiving bore (18, 42) in which a series of arresting elements (20 - 25, 38 - 41) pushing against each other inclusive of balls (20 - 24, 38 - 41) are received, wherein said receiving bore (18 - 42) is disposed at right angles relative to said priming pin (3), i.e. at right angles to an indentation (15) in said priming pin (3) in a position ready for operation at which a ball (20) engages into said indentation (15), wherein into said receiving bore (18, 42) a cross bore (32) is extending in which a releasing pin (33, 34) can be moved, wherein said receiving bore (18, 42) is interrupted at a location facing said cross bore (32) and is limited by an elastically yielding wall element (29, 29a), and wherein at least one of said balls (22, 23, 39, 40) is disposed between said releasing pin (33, 34) and said elastically yielding wall element (29,30; 29a, 30a) and in this way can elastically be pressed out of a position centered in said receiving bore (18, 42),
**characterized in**
**that** at least two balls (22, 23; 39, 40) can elastically be pressed out by said releasing pin (33, 34) of their centered position in said receiving bore (18, 42).

2. Trigger according to claim1,
**characterized in**
**that** a groove (15) as an indentation of said priming pin (3) includes tapered, or conical, respectively, side walls (16, 17) against which one of said balls (20) pushes when said priming pin (3) is ready for operation.

3. Trigger according to claim 2,
**characterized in**
**that** in said receiving bore (18), a cylindrical pin (25) is provided as one of said arresting elements between said ball (20) at the groove (15) of said priming pin (3) and one of said balls (21 - 24, 38, 39) disposed up to said elastically yielding wall element (29, 29a).

4. Trigger according to one of claims 1 to 3,
**characterized in**
**that** said elastically yielding wall element (29, 29a) is a disc which is pressed by a spring (30, 30a) against said balls (22, 23; 39, 40).

5. Trigger according to one of the foregoing claims,
**characterized in**
**that** said releasing pin (34) is connected with an electromagnetic actuation element (35).

6. Trigger according to one of claims 1 to 6.
**characterized by**
a manual actuation element which is connected with said releasing pin (33).

7. Trigger according to one of claims 1 to 6,
**characterized in**
**that** it comprises at least one assembly block (1, 43) in which said receiving bore (18, 42) is formed out with a cross bore (32) for said releasing pin (33, 34) and with a disc and spring reception (31), a bore (2) receiving said priming pin (3), said bore having a connection opening (9) for said pressurized container, a tapped hole (4) for a chucking mechanism (5), and a pressure medium channel.

8. Trigger according to one of claims 5 to 7,
**characterized in**
**that** said electromagnetic actuation element (35) is disposed outside of an assembly block (1, 43).

9. Trigger according to one of the foregoing claims,
**characterized in**
**that** said receiving bore (18, 42) and a disc and spring reception (31) are covered towards the outside by a flat cover (19).

10. Trigger according to one of the foregoing claims,
**characterized in**
**that** between two arresting elements (20, 25) in said receiving bore (18, 42), a sealing O ring (26) is disposed.

11. Trigger according to one of claims 7 to 11,
**characterized in**
**that** said receiving bore (18, 42), said disc and spring reception (31), and said cross bore (32) for said releasing pin (33, 34) are sealed towards the outside.

## Revendications

1. Déclencheur pour réservoir de fluide sous pression, en particulier pour une bouteille de CO₂ à usage unique (10), comportant un axe de perçage (3) pouvant être serré avec un ressort tendeur (7), qui porte en une extrémité faisant face à un segment de fermeture du réservoir de fluide sous pression une pointe de perçage (11), ainsi qu'un dispositif d'arrêt amovible de l'axe de perçage (3), dans lequel le dispositif d'arrêt présente un perçage de réception (18, 42) dans lequel sont logés une série d'éléments d'arrêt (20 - 25, 38 - 41) butant les uns contre les autres, notamment des billes (20 - 24, 38 - 41), dans lequel le perçage de réception (18, 42) est disposé transversalement à l'axe de perçage (3), et ce transversalement à un façonnage (15) dans l'axe de perçage (3) en position opérationnelle, dans laquelle une bille (20) s'engrène dans le façonnage (15), où dans le perçage de réception (18, 42) débouche un alésage transversal (32) dans lequel un axe déclencheur (33, 34) peut être déplacé, le perçage de réception (18, 42) étant évidé en un emplacement opposé à l'alésage transversal (32) et étant limité par un élément de paroi (29, 29a) souple élastique, au moins une des billes (22, 23, 39, 40) reposant entre l'axe déclencheur (33, 34) et l'élément de paroi (29, 30 ; 29a, 30a) souple flexible et pouvant ainsi être pressée de façon élastique par l'axe déclencheur (33, 34) hors d'une position centrée dans le perçage de réception (18, 42), **caractérisé en ce qu'**au moins deux billes (22, 23 ; 39, 40) peuvent être pressées par élasticité par l'axe déclencheur (33, 34) hors de leur position centrée dans le perçage de réception (18, 42).

2. Déclencheur selon la revendication 1, **caractérisé en ce qu'**une rainure (15) présente, en tant que façonnage de l'axe de perçage (3), des parois latérales biseautées ou coniques (16, 17) contre lesquelles vient buter l'une des billes (20) en position opérationnelle de l'axe de perçage (3).

3. Déclencheur selon la revendication 2, **caractérisé en ce que** dans le perçage de réception (18) est prévue une goupille cylindrique (25), en tant qu'un des éléments d'arrêt, entre la bille (20) contre la rainure (15) de l'axe de perçage (3) et une des billes (21-24 ; 38, 39) disposées jusqu'à l'élément de paroi (29, 29a) souple flexible.

4. Déclencheur selon l'une des revendications 1 à 3, **caractérisé en ce que** l'élément de paroi (29, 29a) souple flexible est un disque qui est comprimé par un ressort (30, 30a) contre les billes (22, 23 ; 39, 40).

5. Déclencheur selon l'une des revendications précédentes, **caractérisé en ce que** l'axe déclencheur (34) est en relation avec un élément d'actionnement (35) électromagnétique.

6. Déclencheur selon l'une des revendications 1 à 5, **caractérisé par** un élément d'actionnement manuel qui est relié avec l'axe déclencheur (33).

7. Déclencheur selon l'une des revendications 1 à 6, **caractérisé en ce qu'**il comprend au moins un bloc de montage (1, 43) dans lequel sont façonnés le perçage de réception (18, 42) avec l'alésage transversal (32) pour l'axe déclencheur (33, 34) ainsi qu'avec un logement de disque et de ressort (31), un perçage (2) logeant l'axe de perçage (3) avec une ouverture de raccordement (9) pour le réservoir de fluide sous pression, un perçage fileté (4) pour un mécanisme tendeur (5) ainsi qu'un canal de fluide sous pression.

8. Déclencheur selon l'une des revendications 5 à 7, **caractérisé en ce que** l'élément d'actionnement électromagnétique (35) est disposé à l'extérieur au niveau d'un bloc de montage (1, 43).

9. Déclencheur selon l'une des revendications précédentes, **caractérisé en ce que** le perçage de réception (18, 42) et un logement de disque et ressort (31) sont recouverts à l'extérieur par un couvercle plat (19).

10. Déclencheur selon l'une des revendications précédentes, **caractérisé en ce qu'**entre deux éléments d'arrêt (20, 25), dans le perçage de réception (18, 42), est disposé un joint torique d'étanchéité (26).

11. Déclencheur selon l'une des revendications 7 à 11, **caractérisé en ce que** le perçage de réception (18, 42), le logement pour disque et ressort (31) et l'alésage transversal (32) de l'axe déclencheur (33, 34) sont rendus étanches contre l'extérieur.
